# FASCICULE DE BREVET EUROPEEN

(11) **EP 2 104 213 B1**
(45) Date de publication et mention de la délivrance du brevet: **30.05.2012**
(21) Numéro de dépôt: 08153003.2
(22) Date de dépôt: 19.03.2008
(51) Int. Cl.: H02M 3/158

(54) **Procédé d'asservissement d'un convertisseur DC-DC en mode discontinu**
Steuerungsverfahren eines Gleichstrom/Gleichstrom-Wandlers im aussetzenden Betrieb
Method of controlling a DC-DC converter in discontinuous mode

(43) Date de publication de la demande: 23.09.2009
(73) Titulaire: The Swatch Group Research and Development Ltd., 2074 Marin (CH)
(72) Inventeur: Heim, Pascal, 2024, Saint-Aubin (CH); Perotto, Jean-Félix, 2013, Colombier (CH)
(74) Mandataire: Couillard, Yann Luc Raymond

(56) Documents cités:
- JP-A- 2002 112 534
- US-A- 5 982 160
- US-A1- 2005 258 808
- US-B1- 7 279 877

## Description

L'invention concerne un procédé d'asservissement d'un convertisseur DC-DC fonctionnant notamment en mode discontinu.

L'invention concerne également un convertisseur de tension DC-DC pour la mise en oeuvre du procédé d'asservissement. Un convertisseur ayant les caractéristiques énoncées dans les préambules des revendications 1 et 8 est divulgué dans le document US20050258808.

Le convertisseur de tension DC-DC de la présente invention est de type inductif à découpage, c'est-à-dire avec une inductance comme élément réactif. Il permet de convertir une tension continue d'entrée en une tension continue de sortie du convertisseur, qui a une valeur généralement différente de la valeur de la tension d'entrée. La tension d'entrée est fournie principalement par une batterie ou un accumulateur, ce qui fait que la valeur de cette tension d'entrée peut décroître au cours du temps notamment lors du fonctionnement du convertisseur DC-DC. Cependant, le convertisseur doit être en mesure de garantir une tension de sortie à une valeur déterminée normalement indépendamment de la chute de tension d'entrée, jusqu'à une valeur minimale de fonctionnement, et en fonction de la charge en sortie.

Il existe trois types classiques de convertisseurs inductifs. Un premier type de convertisseur inductif est défini comme un convertisseur Buck, qui permet de fournir une tension de sortie de valeur inférieure à la valeur de la tension d'entrée. Un second type de convertisseur inductif est défini comme un convertisseur Boost, qui permet de fournir une tension de sortie de valeur supérieure à la valeur de la tension d'entrée. Finalement un troisième type de convertisseur inductif est une combinaison d'un convertisseur Buck avec un convertisseur Boost. Ce troisième type de convertisseur permet soit d'élever le niveau de la tension de sortie par rapport au niveau de la tension d'entrée, soit d'abaisser le niveau de la tension de sortie par rapport au niveau de la tension d'entrée.

Une particularité importante d'un convertisseur inductif est de permettre de régler en continu le rapport de conversion par un simple ajustage du rapport cyclique du signal d'horloge. Selon la configuration du convertisseur, un premier signal d'horloge est utilisé notamment pour commander au moins un premier commutateur pour augmenter linéairement le courant à travers l'inductance dans une première phase T1. Ce courant à travers l'inductance est tiré d'une source de tension continue d'entrée, qui peut être de préférence une pile ou un accumulateur. Un second signal d'horloge est utilisé pour commander au moins un second commutateur pour diminuer linéairement le courant à travers l'inductance dans une seconde phase T2 comme expliqué ci-après. De préférence, le courant dans l'inductance doit décroître jusqu'à une valeur de zéro pour un convertisseur DC-DC fonctionnant en mode discontinu.

Un problème qui se pose généralement est de pouvoir contrôler de manière judicieuse la durée de la seconde phase T2 afin que le courant dans l'inductance soit nul au terme de la durée T2. Habituellement, le contrôle de cette durée T2 s'effectue en mesurant la tension résiduelle sur une borne du second commutateur chargé de faire décroître le courant dans l'inductance, par rapport à la masse. Lorsque cette tension est nulle, cela signifie que le courant est également nul à travers l'inductance. Cependant la difficulté pratique d'une telle mesure est que la tension résiduelle est très faible, par exemple de l'ordre d'une dizaine de millivolts. Cela implique d'utiliser un comparateur à très faible offset. De plus, le comparateur utilisé doit être extrêmement rapide sinon la seconde phase T2 risque de se prolonger au-delà de sa valeur idéale, et un courant inverse peut prendre naissance dans l'inductance. Il en résulte donc une perte de rendement du convertisseur.

Une technique pour contourner la difficulté ci-dessus mentionnée, est décrite dans le brevet US 7,279,877 en relation à un convertisseur du type Buck. Dans ce brevet, un comparateur, qui définit l'instant où le courant dans l'inductance est nul, possède un dispositif d'ajustage d'offset. Juste après la fin de la durée T2, la surtension sur un des pôles de l'inductance est mesurée. Le signe de cette surtension est représentatif du courant qui circule dans l'inductance. En fonction du signe de cette surtension, une correction de l'offset du comparateur est effectuée, pour ajuster la durée T2 à une valeur correspondant à un courant nul dans l'inductance. Avec cette manière de faire, il est toujours nécessaire d'utiliser un comparateur rapide pour la mesure de la faible tension résiduelle sur le commutateur de l'inductance, comme pour la méthode de l'art antérieur cité ci-devant, ce qui constitue un inconvénient.

L'invention a donc pour but de pallier aux inconvénients de l'état de la technique en fournissant un procédé d'asservissement d'un convertisseur DC-DC fonctionnant en mode discontinu, qui permet facilement d'ajuster la durée de la seconde phase par une mesure du signe de la surtension générée par l'inductance au moment de la commutation au terme de la seconde phase.

A cet effet, l'invention concerne un procédé d'asservissement d'un convertisseur DC-DC cité ci-devant, qui comprend les caractéristiques définies dans la revendication indépendante 1.

Des étapes particulières du procédé d'asservissement d'un convertisseur DC-DC sont définies dans les revendications dépendantes 2 à 7.

Un avantage du procédé d'asservissement du convertisseur DC-DC selon l'invention réside dans le fait que la durée de la seconde phase dans laquelle le courant dans l'inductance est dans une phase de décroissance, peut être adaptée par une mesure indirecte du courant de l'inductance. Pour ce faire, le signe de la surtension générée par l'inductance lors de la commutation au terme de la seconde phase permet d'ajuster la durée de la seconde phase d'une manière numérique selon le principe du tout ou rien. Il n'est ainsi plus nécessaire d'utiliser un comparateur rapide pour la mesure de la très faible tension d'offset au passage par zéro du courant de l'inductance.

Grâce au convertisseur DC-DC de la présente invention, il est exploité le signe de la surtension sur l'inductance lors de l'ouverture du commutateur ou interrupteur au terme de la durée de la seconde phase T2. Cependant, la détection du signe de la surtension agit différemment sur une boucle de réglage de cette durée T2. En effet au lieu de corriger l'offset d'un comparateur rapide qui mesure la tension résiduelle sur un commutateur comme mentionné par le brevet US 7,279,877, dans la présente invention la durée T2 est adaptée par l'intermédiaire d'un simple intégrateur. Ceci permet d'éliminer tout comparateur rapide à offset contrôlé et simplifie fortement la boucle de réglage de cette durée T2.

L'exploitation du signe de la surtension selon la présente invention est totalement différente de l'approche classique de détection du passage par zéro du courant dans l'inductance par mesure de la très faible tension résiduelle sur le commutateur concerné, dans le cas d'un convertisseur du type Buck par exemple. La mesure de la surtension, notamment son signe par rapport à la tension de sortie, permet de fournir directement le signe du courant, qui circule dans l'inductance juste après le terme de la durée T2 de la seconde phase. Ainsi, l'exploitation de ce signe, qui est de ce fait une variable binaire, est la base de la présente invention. Ainsi le rendement du convertisseur DC-DC basse puissance est fortement augmenté par rapport aux convertisseurs DC-DC de l'état de la technique.

A cet effet, l'invention concerne également un convertisseur DC-DC pour la mise en oeuvre du procédé d'asservissement, qui comprend les caractéristiques de la revendication indépendante 8.

Des formes d'exécution particulières du convertisseur DC-DC sont définies dans les revendications dépendantes 9 à 11.

Les buts, avantages et caractéristiques du procédé d'asservissement du convertisseur DC-DC apparaîtront mieux dans la description suivante sur la base de formes d'exécution du convertisseur non limitatives illustrées par les dessins sur lesquels :
la figure 1a représente de manière simplifiée une première forme d'exécution de base d'un convertisseur DC-DC pour la mise en oeuvre du procédé d'asservissement,
les figures 1b et 1c représentent des graphiques de la forme du courant traversant l'inductance et de la tension à une borne de l'inductance dans le temps du convertisseur de la figure 1a pour une durée trop courte ou trop longue d'une seconde phase du procédé d'asservissement,
la figure 2a représente de manière simplifiée une seconde forme d'exécution de base d'un convertisseur DC-DC pour la mise en oeuvre du procédé d'asservissement,
les figures 2b et 2c représentent des graphiques de la forme du courant traversant l'inductance et de la tension à une borne de l'inductance dans le temps du convertisseur de la figure 2a pour une durée trop courte ou trop longue d'une seconde phase du procédé d'asservissement,
la figure 3a représente de manière simplifiée une troisième forme d'exécution de base d'un convertisseur DC-DC pour la mise en oeuvre du procédé d'asservissement,
les figures 3b et 3c représentent des graphiques de la forme du courant traversant l'inductance et de la tension à une borne de l'inductance dans le temps du convertisseur de la figure 3a pour une durée trop courte ou trop longue d'une seconde phase du procédé d'asservissement,
la figure 4a représente de manière simplifiée une première variante du convertisseur DC-DC de la figure 2a avec son dispositif d'ajustement de la durée de la seconde phase du procédé d'asservissement selon l'invention,
la figure 4b représente des graphiques dans le temps des signaux de commande appliqués à différents éléments du convertisseur DC-DC de la figure 4a dans chaque cycle du procédé d'asservissement selon l'invention,
la figure 5a représente de manière simplifiée une seconde variante du convertisseur DC-DC de la figure 2a avec son dispositif d'ajustement de la durée de la seconde phase du procédé d'asservissement selon l'invention, et
la figure 5b représente des graphiques dans le temps des signaux de commande appliqués à différents éléments du convertisseur DC-DC de la figure 5a dans chaque cycle du procédé d'asservissement selon l'invention.

Dans la description suivante, tous les éléments des différents types de convertisseur DC-DC utilisés pour la mise en oeuvre du procédé d'asservissement qui sont bien connus de l'homme du métier dans ce domaine technique ne seront relatés que de manière simplifiée. Pour comprendre le procédé d'asservissement du convertisseur DC-DC, il est fait référence tout d'abord à l'explication des éléments de base des différents types de convertisseur DC-DC.

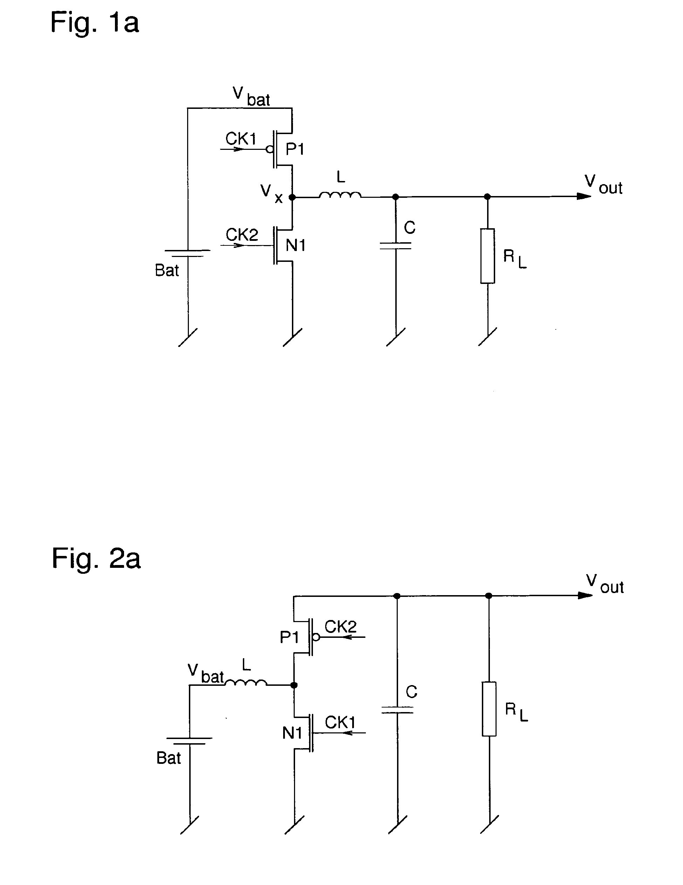

A la figure 1a, il est représenté schématiquement un convertisseur DC-DC du type Buck, c'est-à-dire un convertisseur réducteur de tension avec un niveau de la tension de sortie inférieur au niveau de la tension d'entrée continue. La réduction de la tension de sortie Vout par rapport à la tension d'entrée Vbat dépend des durées des première et seconde phases T1 et T2, et est fonction du rapport T1/(T1+T2). La tension d'entrée Vbat est de préférence fournie par une batterie Bat, alors qu'à la sortie Vout un filtrage est opéré par le condensateur C mis en parallèle avec une résistance de charge R_{L}.

Le convertisseur DC-DC comprend notamment une inductance L comme élément réactif, un transistor PMOS P1 et un transistor NMOS N1, en tant que commutateurs. Les transistors PMOS P1 et NMOS N1 sont reliés en série avec leur borne de source reliée respectivement à chaque borne de la batterie Bat. Les transistors P1 et N1 sont commandés alternativement chacun par un signal de commande respectif CK1 et CK2 sur leur borne de grille respective. Le signal de commande CK1 définit la première phase du procédé d'asservissement, alors que le signal de commande CK2 définit la seconde phase du procédé. Le noeud de connexion des drains des transistors P1 et N1 en série est relié à une borne de l'inductance L, alors que l'autre borne de l'inductance L est reliée en sortie du convertisseur sur le condensateur C.

En fonctionnement normal, une première boucle d'asservissement adapte la valeur de la durée T1 de la première phase de sorte que la tension de sortie Vout corresponde à la tension de référence désirée. La valeur de la durée T2 de la seconde phase est quant à elle obtenue par une seconde boucle d'asservissement selon l'invention.

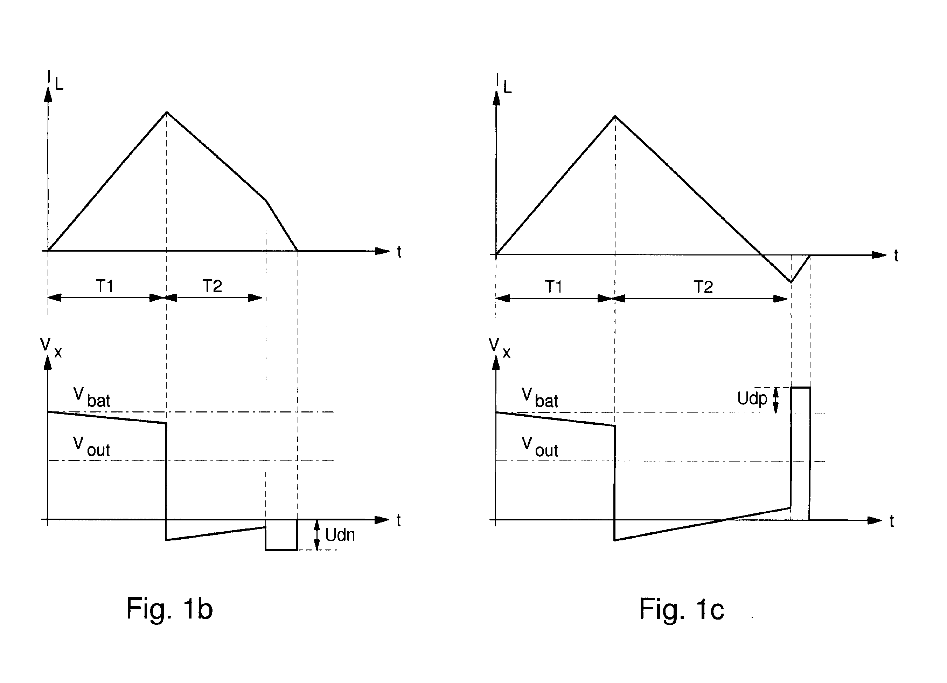

A la figure 1b, il est représenté un graphique de la forme du courant I_{L} traversant l'inductance dans les première et seconde phases. Dans la première phase de durée T1, le courant augmente linéairement, alors que dans la seconde phase de durée T2, le courant diminue linéairement. Dans la première phase de durée T1, le transistor PMOS P1 est rendu conducteur par un signal de commande CK1 fourni sur sa borne de grille, alors que le transistor NMOS N1 est rendu non conducteur. Dans la seconde phase de durée T2 par contre, c'est le transistor NMOS N1 qui est rendu conducteur par un autre signal de commande CK2 fourni sur sa borne de grille, alors que le transistor PMOS P1 est rendu non conducteur. Le signal de commande CK1 doit être à l'état bas pour rendre conducteur le transistor PMOS P1, alors que le signal de commande CK2 doit être à l'état haut pour rendre conducteur le transistor NMOS N1.

Comme on peut le constater sur la figure 1b, la durée T2 de la seconde phase est trop courte. Le courant dans l'inductance n'est donc pas nul au terme de cette seconde phase, et c'est la diode drain substrat du transistor NMOS N1 qui assure la décroissance du courant I_{L} jusqu'à 0. Ainsi la tension Vx au noeud de connexion de l'inductance L et des bornes de drain des deux transistors P1 et N1 passe au-dessous de 0 d'une valeur de tension Udn négative au terme de la durée T2, ce qui signifie que la durée T2 était trop courte.

A la figure 1c, il est représenté un graphique de la forme du courant I_{L} traversant l'inductance dans les première et seconde phases, et de la tension Vx, mais cette fois-ci pour une durée T2 de la seconde phase plus longue que celle requise pour annuler le courant I_{L}. Au terme de la durée T2, la diode drain substrat du transistor PMOS P1 assure l'annulation du courant en générant cette fois-ci une tension Vx supérieure à la tension d'entrée Vbat d'une tension directe de diode Udp.

Ainsi au terme de la durée T2, il y a une grande variation de cette tension Vx en fonction de la durée T2, qui peut être trop courte ou trop longue par rapport à la durée optimale recherchée. Cette grande différence de tension ou préférentiellement son signe par rapport à la tension de sortie Vout est facilement exploitable pour assurer la régulation de la durée T2 selon le procédé d'asservissement de l'invention décrit ci-après.

A la figure 2a, il est représenté schématiquement un convertisseur DC-DC du type Boost. Ce type de convertisseur permet d'augmenter le niveau de la tension de sortie Vout par rapport au niveau de la tension d'entrée continue Vbat. Le rapport d'élévation de tension est donné par les durées T1 et T2 des première et seconde phases, c'est-à-dire par le rapport (T1 +T2)/T1.

Le convertisseur DC-DC du type Boost comprend notamment une inductance L comme élément réactif, un transistor PMOS P1 et un transistor NMOS N1 en tant que commutateurs. Les transistors PMOS P1 et NMOS N1 sont reliés en série. La borne de source du transistor N1 est reliée à une borne de masse, alors que la borne de source du transistor P1 est reliée à une borne de sortie Vout où un filtrage est opéré par le condensateur C mis en parallèle avec une résistance de charge R_{L}.

Les transistors P1 et N1 sont commandés alternativement chacun par un signal de commande respectif CK1 et CK2 sur leur borne de grille respective. Le signal de commande CK1 définit la première phase du procédé d'asservissement, alors que le signal de commande CK2 définit la seconde phase du procédé. Le signal de commande CK1 doit être à l'état haut pour rendre conducteur le transistor NMOS N1, alors que le signal de commande CK2 doit être à l'état bas pour rendre conducteur le transistor PMOS P1.

Le noeud de connexion Vy des drains des transistors P1 et N1 en série est relié à une borne de l'inductance L, alors que l'autre borne de l'inductance L est reliée à une borne positive Vbat d'une source de tension continue. Cette source de tension continue est de préférence une batterie Bat ou un accumulateur.

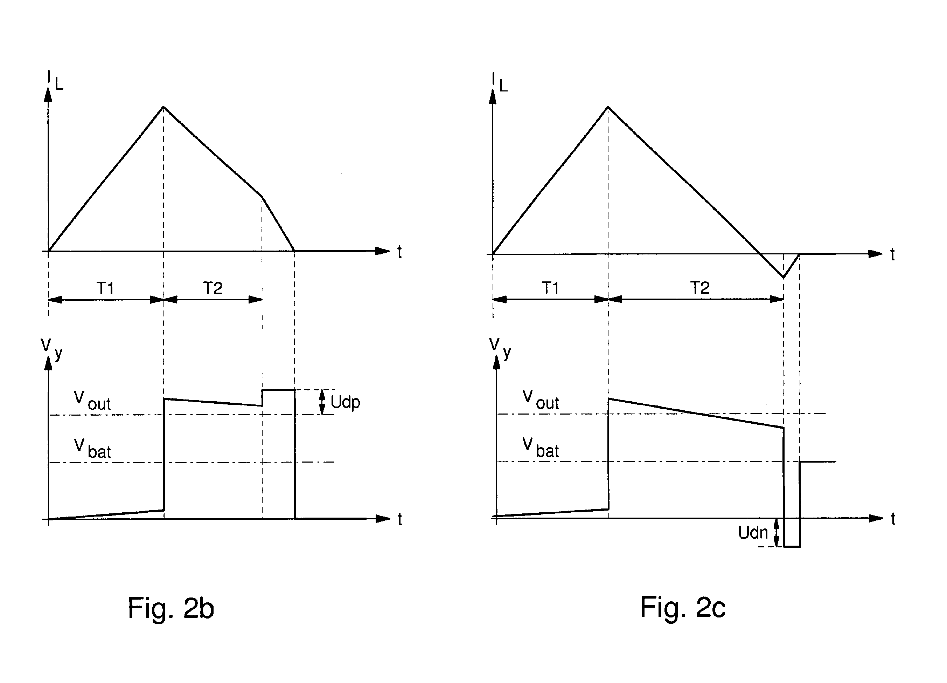

Les formes d'onde du courant I_{L} traversant l'inductance L, ainsi que la tension Vy au noeud de connexion des bornes de drain des transistors P1 et N1, et de l'inductance L sont représentées sur les figures 2b et 2c.

Les formes d'onde du courant à travers l'inductance sur ces figures 2b et 2c correspondent aux formes d'onde du courant décrite en référence aux figures 1b et 1c. Par contre, les formes d'onde de la tension Vy concernant la détection de surtension sont l'inverse de celles de la tension Vx montrées aux figures 1b et 1 c. Dans le premier cas montré à la figure 2b, la durée T2 est trop courte. Au terme de cette durée T2, la diode drain substrat du transistor PMOS P1 assure l'annulation du courant en générant une tension Vy supérieure à la tension de sortie Vout d'une tension directe de diode Udp.

Dans le deuxième cas montré à la figure 2c, la durée T2 est trop longue. Au terme de cette durée T2, la diode drain substrat du transistor NMOS N1 assure l'annulation du courant en générant cette fois-ci une tension Vy d'une valeur de tension Udn négative. Ainsi comme précédemment, le signe de la tension Vy de l'inductance juste après la durée T2 à ajuster dépend du signe du courant I_{L} à travers l'inductance.

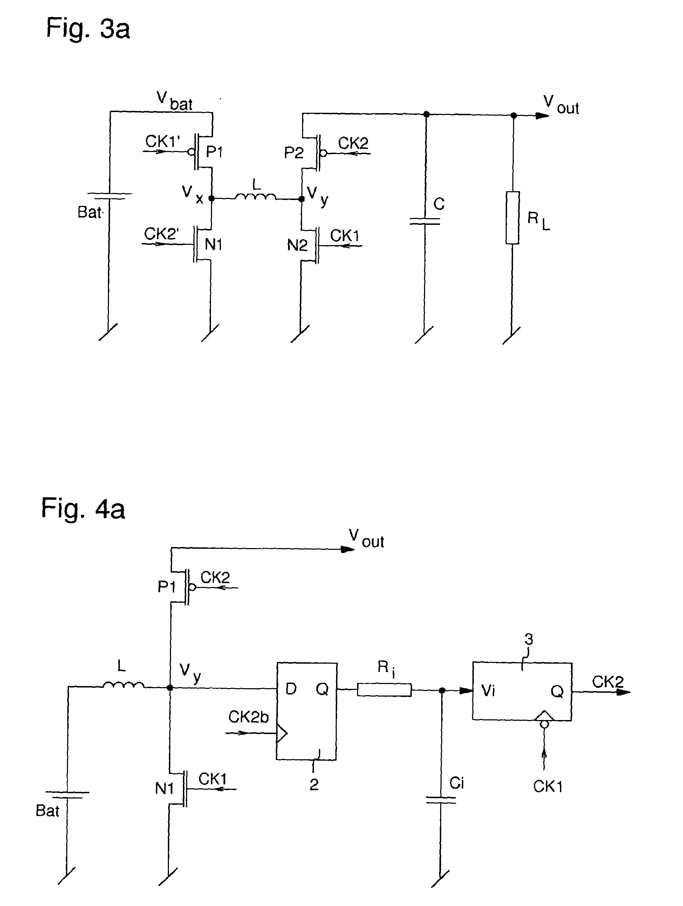

A la figure 3a, il est représenté schématiquement un convertisseur DC-DC combinant le type Buck et Boost. Ce type de convertisseur permet normalement soit d'augmenter, soit de diminuer le niveau de la tension de sortie Vout par rapport au niveau de la tension d'entrée continue Vbat. Cependant, ce type de convertisseur peut également fournir une tension de sortie Vout de même niveau que le niveau de la tension d'entrée Vbat. Le rapport d'élévation ou de diminution de tension est donné par les durées T1 et T2 des première et seconde phases, c'est-à-dire par T1/T2.

Le convertisseur DC-DC combiné comprend notamment une inductance L comme élément réactif, un premier transistor PMOS P1, un premier transistor NMOS N1, un second transistor PMOS P2 et un second transistor NMOS N2. Les premiers transistors PMOS P1 et NMOS N1 sont reliés en série avec leur borne de source reliée respectivement à chaque borne d'une source de tension continue, qui peut être une batterie Bat. Le noeud de connexion Vx des bornes de drain des transistors P1 et N1 en série est relié à une première borne de l'inductance L. Les seconds transistors PMOS P2 et NMOS N2 sont reliés en série avec leur borne de source reliée respectivement à la borne de tension de sortie Vout et à la borne de masse. Chaque borne de drain Vy de ces seconds transistors P2 et N2 est reliée à une seconde borne de l'inductance L. Au niveau de la borne de sortie Vout, un filtrage est opéré par le condensateur C mis en parallèle avec une résistance de charge R_{L}.

Tout d'abord, le premier transistor P1 et le second transistor N2 sont commandés pour être rendus conducteurs dans une même première phase de durée T1 chacun par un signal de commande respectif CK1' et CK1 appliqué sur leur borne de grille. Le signal de commande CK1 est à l'état haut, quand le signal de commande inverse CK1' est à l'état bas. Dans cette première phase, le second transistor P2 et le premier transistor N1 ne sont pas rendus conducteurs. Dans cette première phase, l'inductance L est traversée par un courant linéairement croissant.

Dans une seconde phase de durée T2 suivant la première phase, le second transistor P2 et le premier transistor N1 sont rendus conducteurs chacun par un signal de commande respectif CK2 et CK2' appliqué sur leur borne de grille. Le signal de commande CK2' est à l'état haut, quand le signal de commande inverse CK2 est à l'état bas. Dans cette seconde phase, le premier transistor P1 et le second transistor N2 ne sont pas rendus conducteurs. Dans cette seconde phase, le courant à travers l'inductance L décroît normalement jusqu'à une valeur nulle si la durée T2 est bien ajustée.

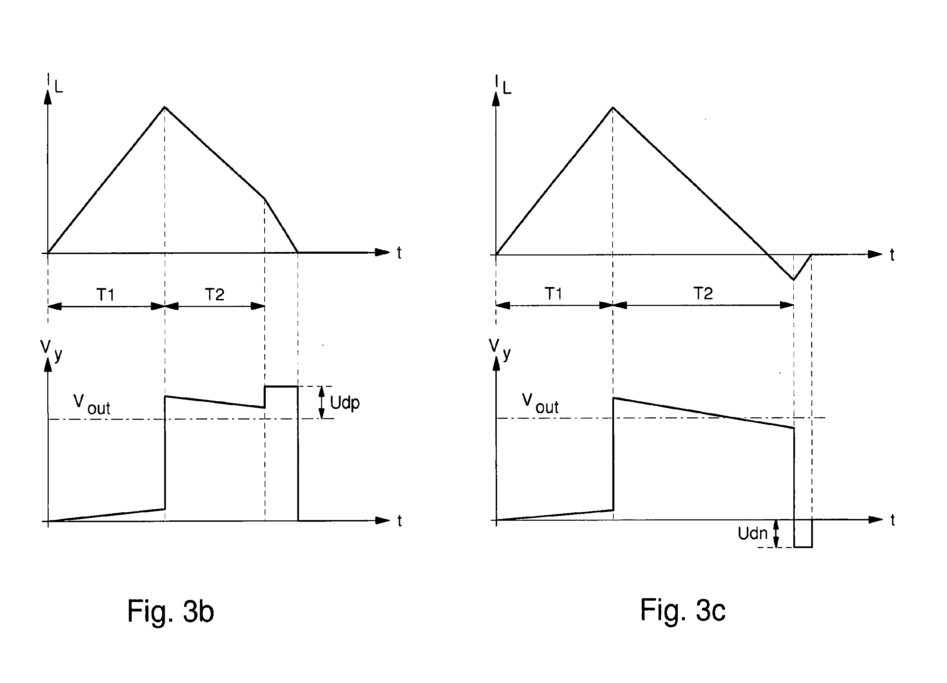

Les formes d'onde sur les figures 3b et 3c correspondent concernant la détection de surtension aux formes d'onde décrite en référence principalement aux figures 2b et 2c. Dans le premier cas montré à la figure 3b, la durée T2 est trop courte. Au terme de cette durée T2, la diode drain substrat du second transistor PMOS P2 assure l'annulation du courant en générant une tension Vy supérieure à la tension de sortie Vout d'une tension directe de diode Udp.

Dans le deuxième cas montré à la figure 3c, la durée T2 est trop longue. Au terme de cette durée T2, la diode drain substrat du second transistor NMOS N2 assure l'annulation du courant en générant cette fois-ci une tension Vy d'une valeur de tension Udn négative. Ainsi comme précédemment, le signe de la tension Vy de l'inductance juste après la durée T2 à ajuster dépend du signe du courant I_{L} à travers l'inductance L.

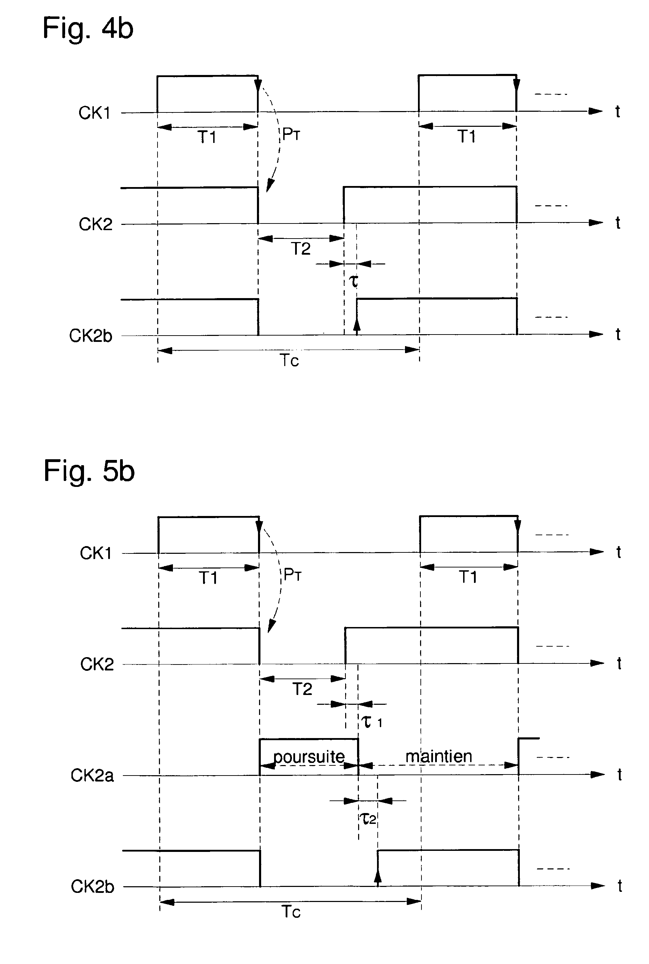

Le procédé d'asservissement d'un convertisseur DC-DC selon l'invention sera maintenant expliqué en référence aux figures 4a et 4b, qui concernent un convertisseur du type Boost. Cependant il est bien clair que ledit procédé peut s'appliquer à n'importe quel type de convertisseur DC-DC décrit ci-dessus ayant une inductance L comme élément réactif.

Comme décrit précédemment, la tension sur une des bornes de l'inductance L est exploitée pour détecter le signe de cette tension au terme de la seconde durée T2 de la seconde phase afin d'opérer une correction de la durée T2 par rapport à une valeur idéale. Contrairement au dispositif décrit dans le brevet US 7,279,877, qui utilise cette information pour ajuster l'offset d'un comparateur rapide détectant le passage par zéro du courant dans l'inductance, le procédé d'asservissement selon l'invention n'utilise pas de comparateur rapide pour ajuster la durée T2. Il est simplement effectué des approximations successives sur la durée T2 pour la faire converger vers sa valeur optimale.

La figure 4a représente une première variante du convertisseur DC-DC avec un dispositif de génération et d'asservissement du délai T2 pour la mise en oeuvre du procédé d'asservissement selon l'invention. Les commutateurs utilisés dans cette forme d'exécution du convertisseur DC-DC sont de préférence un transistor PMOS P1 et un transistor NMOS N1 montés en série. Le type du convertisseur DC-DC de cette figure 4a correspond à la seconde forme d'exécution décrite en référence à la figure 2a. Ce type de convertisseur DC-DC fournit une tension de sortie Vout de niveau plus élevé que le niveau de la tension d'entrée Vbat provenant par exemple d'une batterie Bat.

Ce convertisseur DC-DC du type Boost comprend donc une inductance L comme élément réactif, un transistor PMOS P1 et un transistor NMOS N1. Les transistors PMOS P1 et NMOS N1 sont reliés en série. La borne de source du transistor N1 est reliée à une borne de masse, alors que la borne de source du transistor P1 est reliée à une borne de sortie Vout. Le noeud de connexion Vy des drains des transistors P1 et N1 en série est relié à une borne de l'inductance L, alors que l'autre borne de l'inductance L est reliée à une borne positive Vbat d'une source de tension continue. Cette source de tension continue est de préférence une batterie Bat ou un accumulateur. Par simplification, il n'est pas représenté le condensateur de sortie C et la résistance de charge R_{L}.

Comme montré également par la figure 4b, le transistor NMOS N1 est commandé sur sa borne de grille par un premier signal de commande CK1 pour être rendu conducteur durant la première phase de durée T1. Le premier signal de commande est dans un état 1, c'est-à-dire un état haut, pendant la première phase. Ce premier signal de commande CK1 est fourni dans une première boucle d'asservissement non représentée, car bien connue et ne faisant pas partie de la présente invention.

Le transistor PMOS P1 est commandé sur sa borne de grille par un second signal de commande CK2 pour le rendre non conducteur pendant la première phase, mais conducteur pendant la seconde phase de durée T2. Durant la première phase, le second signal de commande CK2 est donc à l'état 1, alors qu'il passe à l'état 0, c'est-à-dire à l'état bas, au début de la seconde phase. Le transistor NMOS N1 est rendu non conducteur pendant la seconde phase avec le premier signal de commande CK1 passant à l'état 0. Le flanc descendant du premier signal de commande CK1 peut être utilisé pour opérer la commutation de la première phase à la seconde phase comme indiqué symboliquement par la référence P_{T} sur la figure 4b.

Pendant la première durée T1 de la première phase, le courant croît linéairement à travers l'inductance L, alors que pendant la seconde durée T2 de la seconde phase, le courant décroît dans l'inductance. La fréquence de fonctionnement ou de cadencement d'un tel convertisseur peut être comprise entre quelques centaines de Hertz à quelques MégaHertz, par exemple de l'ordre de 2 MHz avec des tensions d'entrée Vbat qui peuvent être comprises entre 0.9 à 3.3 V par exemple. Cette fréquence dépend de la valeur de l'inductance L placée dans le convertisseur DC-DC.

Pour pouvoir ajuster la durée T2 de la seconde phase dans le cas où cette durée est trop courte ou trop longue, le dispositif d'ajustement comprend des moyens de détection de la surtension sur la borne Vy de l'inductance au terme de la seconde phase. Ces moyens de détection comprennent une bascule du type D 2. L'entrée de cette bascule du type D peut être reliée directement au noeud de connexion Vy des bornes de drain des transistors P1 et N1 avec une borne de l'inductance L. La bascule D est cadencée par un troisième signal de commande CK2b, dont le flanc montant sert à faire passer l'état de l'entrée D à la sortie non inverseuse Q. La sortie non inverseuse Q de la bascule est reliée à des moyens de temporisation, qui comprennent tout d'abord un simple intégrateur composé d'une résistance Ri et d'un condensateur Ci. A chaque cycle T_{c} de fonctionnement de la boucle d'asservissement du convertisseur DC-DC, une intégration est opérée par l'agencement en filtre passe-bas de la résistance Ri et du condensateur Ci. Le niveau de tension sur le condensateur Ci permet à un temporisateur 3 des moyens de temporisation, qui est cadencé par l'inverse du premier signal de commande CK1, c'est-à-dire au flanc descendant du signal CK1, de fournir un signal de sortie CK2. Ce signal de sortie CK2 agit comme second signal de commande définissant la durée T2 adaptée de la seconde phase dans chaque cycle.

Comme représenté à la figure 4b, au terme de la première phase T1, le second signal de commande CK2 devient actif pour rendre conducteur le transistor PMOS P1. Comme la tension de sortie Vout est plus grande que la tension d'entrée Vbat, le courant dans l'inductance décroît. A un certain moment déterminé par le temporisateur 3, le second signal de commande CK2 est rendu inactif et de ce fait bloque le transistor P1. Etant donné que les deux transistors N1 et P1 sont bloqués et si le courant à travers l'inductance n'est pas nul, ce courant doit tendre vers 0 par l'intermédiaire des diodes drain substrat des transistors P1 ou N1. La diode en fonction dépend du sens du courant traversant l'inductance au terme de la durée T2. Ainsi ce passage par les diodes parasites crée une tension Vy qui est soit plus grande que la tension de sortie Vout, ou inférieure à 0 en fonction de la diode utilisée.

Le troisième signal de commande CK2b est une réplique du second signal de commande CK2 pour commander par son flanc montant l'état de l'entrée de la bascule D à la sortie Q. Toutefois, le flanc montant du troisième signal de commande du passage de l'état 0 à l'état 1 intervient avec un léger retard τ par rapport au passage de l'état 0 à l'état 1 du second signal de commande CK2 définissant la durée T2. Ce léger retard T est déterminé pour laisser le temps à la tension Vy à une borne de l'inductance de bouger dans la bonne direction soit au-dessus de la tension de sortie Vout, soit en dessous de 0. Ce léger retard τ peut être de l'ordre de quelques nanosecondes.

Toutes ces opérations sont répétées au rythme de l'horloge principale du convertisseur. La sortie Q de la bascule D est ainsi un flux d'information binaire. La moyenne de cette information binaire représente la tension de commande Vi à appliquer au temporisateur 3. Ainsi ce temporisateur fournit un second signal de commande CK2 de durée T2, qui tend par approximations successives vers sa valeur idéale. Comme indiqué précédemment, un simple filtre passe-bas, qui est composé de la résistance Ri et du condensateur Ci, joue le rôle d'intégrateur du flux binaire. Ce filtre suffit à produire cette tension continue Vi de réglage du temporisateur de manière à avoir au cours des cycles de réglage successifs une valeur de la durée T2 bien ajustée par de simples éléments électroniques.

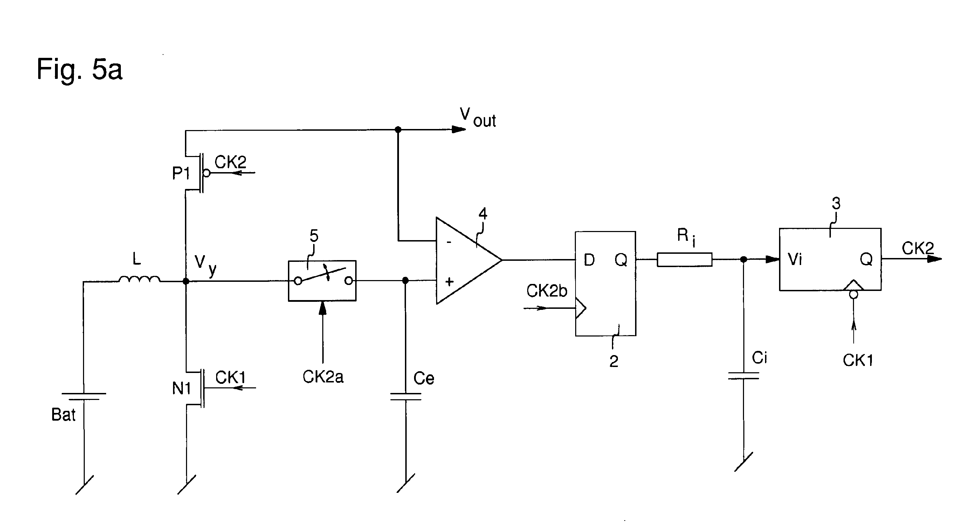

La figure 5a représente une seconde variante du convertisseur DC-DC avec un dispositif d'ajustement du délai T2 pour la mise en oeuvre du procédé d'asservissement selon l'invention. Ce dispositif d'ajustement comprend des moyens de détection de la surtension sur la borne Vy de l'inductance au terme de la seconde phase. Ces moyens de détection du signe de cette surtension comprennent principalement un interrupteur 5, un comparateur 4 et une bascule du type D 2. Comme pour la figure 4a, les commutateurs utilisés sont de préférence un transistor PMOS P1 et un transistor NMOS N1 montés en série. Par simplification, le convertisseur DC-DC de cette figure 5a correspond également à la seconde forme d'exécution décrite en référence à la figure 2a, mais sans le condensateur de sortie C et la résistance de charge R_{L}. Ce type de convertisseur DC-DC fournit une tension de sortie Vout de niveau plus élevé que le niveau de la tension d'entrée Vbat provenant par exemple d'une batterie Bat. Comme ce convertisseur DC-DC comprend plusieurs éléments identiques à ceux décrits en référence à la figure 4a, ils ne seront donc plus expliqués en détail.

Comme montré également à la figure 5b, pour pouvoir ajuster la durée T2 de la seconde phase dans le cas où cette durée est trop courte ou trop longue, le convertisseur comprend également un dispositif d'ajustement de cette durée T2. Pour ce faire, le dispositif d'ajustement de cette seconde variante du convertisseur DC-DC comprend en outre entre la borne Vy de l'inductance L et la bascule D 2, un comparateur 4, un interrupteur 5 et un condensateur Ce à une entrée du comparateur. L'entrée négative du comparateur 4 est reliée à la borne de sortie Vout, alors que l'entrée positive du comparateur est reliée par l'intermédiaire d'un interrupteur 5 au noeud de connexion Vy des bornes de drain des transistors P1 et N1 avec une borne de l'inductance L. Un condensateur Ce pour mémoriser le niveau de tension Vy relie l'entrée positive du comparateur 4 à la borne de masse du convertisseur. La fermeture ou l'ouverture de l'interrupteur 5 est commandé par un quatrième signal de commande CK2a.

L'interrupteur 5, qui peut être un transistor NMOS, est commandé par le quatrième signal de commande CK2a et est dans un état fermé pendant toute la durée T2, et pendant encore un délai supplémentaire τ₁ très court. Une mémorisation de l'état au noeud Vy est effectuée sur le condensateur Ce comme un suiveur-bloqueur traditionnel. Le quatrième signal de commande CK2a est une réplique inversée du second signal de commande CK2, mais avec un état 1 prolongé par ce très court délai supplémentaire τ₁. Ce très court délai τ₁ peut être de l'ordre de quelques nanosecondes. Le comparateur 4 compare la tension mémorisée sur le condensateur Ce avec la tension de sortie Vout pour définir le signe de l'erreur sur la durée T2 de la seconde phase par rapport à la valeur idéale.

Ce comparateur 4 est tout à fait classique et n'a de ce fait pas besoin d'être rapide puisque les tensions présentes à ses entrées sont parfaitement stables. Le comparateur 4 fournit ainsi à sa sortie un signal logique prenant l'état 1 ou l'état 0. Ce signal logique est mémorisé dans la bascule de type D, qui est cadencée par le troisième signal de commande CK2b, qui est une réplique du signal CK2, mais avec un retard supplémentaire de τ₁+τ₂ au passage de l'état 0 à l'état 1 par rapport à ce second signal de commande CK2. Ce troisième signal de commande CK2b est également retardé de τ₂ par rapport au passage de l'état fermé à l'état ouvert de l'interrupteur 5 commandé par le quatrième signal de commande CK2a. Cette durée ou retard τ₂ doit être suffisant pour que la sortie du comparateur soit stable au moment de la mémorisation dans la bascule D.

Comme auparavant toutes ces opérations sont répétées au rythme de l'horloge principale du convertisseur. La sortie Q de la bascule D est ainsi un flux d'information binaire. La moyenne de cette information binaire représente la tension de commande à appliquer au temporisateur 3 afin qu'il fournisse le signal CK2 de durée T2, qui tend par approximations successives vers sa valeur idéale. Le simple filtre passe-bas, qui est composé de la résistance Ri et du condensateur Ci, joue ainsi le rôle d'intégrateur du flux binaire. Ce filtre suffit à produire une tension continue Vi de réglage du temporisateur 3.

Bien entendu le dispositif d'ajustement de la durée T2 pour la mise en oeuvre du procédé d'asservissement du convertisseur DC-DC en mode discontinu, peut être appliqué d'une manière équivalente à une structure de base du convertisseur DC-DC représentée aux figures 1a et 3a. Toutefois, les premier et second signaux de commande CK1 et CK2 à la figure 1a sont des signaux inverses des premier et second signaux CK1 et CK2 de la figure 2a. Le transistor PMOS P1 doit être rendu conducteur dans la première phase, alors que le transistor NMOS N1 doit être rendu conducteur dans la seconde phase.

A partir de la description qui vient d'être faite, plusieurs variantes du procédé d'asservissement d'un convertisseur DC-DC peuvent être conçues par l'homme du métier sans sortir du cadre de l'invention définie par les revendications. Le convertisseur DC-DC peut comprendre deux sorties avec une seule inductance comme élément réactif.

## Revendications

1. Procédé d'asservissement d'un convertisseur DC-DC, qui comprend une inductance (L) en tant qu'élément réactif, pour permettre en coopération d'un ensemble d'au moins deux commutateurs (P1, N1), fonctionnant en alternance, de fournir une tension de sortie (Vout) d'un niveau supérieur, égal ou inférieur au niveau d'une tension d'entrée (Vbat) fournie par une source de tension continue (Bat), le procédé comprenant dans chaque cycle successif d'asservissement, une première phase dans laquelle au moins un premier commutateur (P1, N1) est commandé par un premier signal de commande (CK1) afin de le rendre conducteur et pour faire croître un courant à travers l'inductance pendant une première durée déterminée (T1),
**caractérisé en ce que** le procédé comprend à la suite de la première phase, une seconde phase, dans laquelle au moins un second commutateur (N1, P1) est commandé par un second signal de commande (CK2) pour le rendre conducteur et pour faire décroître le courant à travers l'inductance pendant une seconde durée (T2) ajustable, des moyens de détection (2, 4, 5) étant prévus pour détecter au terme de la seconde phase le signe d'une surtension sur une des bornes (Vx, Vy) de l'inductance reliée aux commutateurs et fournir un signal de détection, qui est maintenu pendant une durée déterminée, avant une nouvelle détection d'un cycle successif, dans un état haut ou dans un état bas en fonction du signe de la surtension détectée, des moyens de temporisation (Ri, Ci, 3) recevant le signal de détection pour adapter dans chaque cycle successif la seconde durée de la seconde phase de manière à annuler le courant dans l'inductance au terme de la seconde phase.

2. Procédé d'asservissement selon la revendication 1, **caractérisé en ce que** dans chaque cycle successif d'asservissement, une intégration (Ri, Ci) du signal binaire de détection est opérée dans les moyens de temporisation pour fournir une tension de commande moyenne (Vi) à un temporisateur (3), qui fournit le second signal de commande (CK2) dans la seconde phase de durée adaptée.

3. Procédé d'asservissement selon la revendication 2, **caractérisé en ce que** le temporisateur (3) est cadencé par le flanc montant ou descendant du premier signal de commande (CK1) au terme de la première phase afin de fournir le second signal de commande (CK2) pour rendre conducteur le second commutateur (P1, N1) dans la seconde phase pendant la seconde durée (T2) adaptée.

4. Procédé d'asservissement selon l'une des revendications précédentes, **caractérisé en ce que** la détection du signe de la surtension sur une borne (Vx, Vy) de l'inductance au terme de la seconde phase par les moyens de détection est opérée par l'intermédiaire d'une bascule de type D (2), qui est cadencée dans chaque cycle par un flanc montant ou un flanc descendant d'un troisième signal de commande (CK2b) pour fournir en sortie le signal de détection.

5. Procédé d'asservissement selon la revendication 4, pour lequel une entrée de la bascule de type D est reliée directement à la borne de l'inductance reliée aux commutateurs (P1, N1), **caractérisé en ce que** le flanc montant ou le flanc descendant du troisième signal de commande (CK2b) pour la détection de la surtension intervient après un délai (τ) suivant la fin de la seconde durée de la seconde phase et avant la fin d'un cycle d'asservissement en mode discontinu.

6. Procédé d'asservissement selon la revendication 4, pour lequel un comparateur (4) du convertisseur DC-DC est relié par une entrée négative à une borne de la tension de sortie (Vout) et par une entrée positive à un condensateur (Ce) pour mémoriser la tension sur une borne de l'inductance (L) reliée aux commutateurs à travers un interrupteur (5) commandé par un quatrième signal de commande (CK2a), **caractérisé en ce que** la détection du signe de la surtension est opérée directement par le comparateur (4) relié par l'interrupteur (5) commandé par le quatrième signal de commande (CK2a) dans un état fermé pendant toute la seconde durée de la seconde phase, au terme de la seconde durée (T2), l'interrupteur étant ouvert pour mémoriser le niveau de la surtension sur le condensateur afin que le comparateur fournisse un signal de sortie à l'entrée de la bascule de type D (2).

7. Procédé d'asservissement selon la revendication 6, **caractérisé en ce que** le quatrième signal de commande (CK2a) commande l'ouverture de l'interrupteur (5) après un délai (τ₁) suivant la fin de la seconde durée de la seconde phase et avant la fin de chaque cycle d'asservissement en mode discontinu, et **en ce que** le flanc montant ou le flanc descendant du troisième signal de commande (CK2b) pour cadencer la bascule de type D (2) intervient après un délai supplémentaire (τ₂) au délai d'ouverture de l'interrupteur et avant la fin de chaque cycle d'asservissement en mode discontinu.

8. Convertisseur DC-DC convenant à la mise en oeuvre du procédé d'asservissement selon l'une des revendications précédentes, ledit convertisseur comprenant une inductance (L) en tant qu'élément réactif, pour permettre en coopération d'un ensemble d'au moins deux commutateurs (P1, N1), fonctionnant en alternance, de fournir une tension de sortie (Vout) d'un niveau supérieur, égal ou inférieur au niveau d'une tension d'entrée (Vbat) fournie par une source de tension continue (Bat), au moins un premier commutateur étant commandé par un premier signal de commande (CK1) dans une première phase d'un cycle d'asservissement, alors qu'au moins un second commutateur étant commandé par un second signal de commande (CK2) dans une seconde phase, **caractérisé en ce qu'**il comprend également des moyens de détection (2, 4, 5) qui sont prévus pour détecter au terme d'une seconde phase de chaque cycle d'asservissement, le signe d'une surtension sur une des bornes (Vx, Vy) de l'inductance reliée aux commutateurs et fournir un signal de détection, qui est dans un état haut ou dans un état bas en fonction du signe de la surtension détectée, à des moyens de temporisation (Ri, Ci, 3) qui permettent d'adapter dans chaque cycle successif la seconde durée de la seconde phase de manière à annuler le courant dans l'inductance au terme de la seconde phase.

9. Convertisseur DC-DC selon la revendication 8, **caractérisé en ce que** les moyens de détection comprennent une bascule de type D (2), dont une entrée est reliée directement à une borne (Vx, Vy) de l'inductance reliée aux commutateurs, ladite bascule de type D étant cadencée par un flanc montant ou un flanc descendant d'un troisième signal de commande intervenant après la fin de la seconde phase pour fournir le signal de détection dans un état haut ou dans un état bas.

10. Convertisseur DC-DC selon la revendication 8, **caractérisé en ce que** les moyens de détection comprennent un comparateur (4) relié par une entrée négative à une borne de la tension de sortie (Vout) et par une entrée positive à un condensateur (Ce) pour mémoriser la tension sur une borne de l'inductance (L) reliée aux commutateurs à travers un interrupteur (5) commandé par un quatrième signal de commande (CK2a), pour que l'interrupteur soit dans un état fermé pendant chaque seconde phase et dans un état ouvert après un premier délai (τ₁) suivant la seconde phase, un signal de sortie du comparateur étant fourni à une bascule de type D, qui est cadencée par un flanc montant ou un flanc descendant d'un troisième signal de commande intervenant après un second délai (τ₂) suivant l'ouverture de l'interrupteur, pour fournir le signal de détection dans un état haut ou dans un état bas.

11. Convertisseur DC-DC selon l'une des revendications 8 à 10, **caractérisé en ce que** les moyens de temporisation comprennent un intégrateur, qui est composé d'une résistance (Ri) reliée en sortie des moyens de détection, et d'un condensateur (Ci), et un temporisateur (3) relié au noeud de connexion de la résistance et du condensateur, dont la tension mémorisée sur le condensateur commande le temporisateur pour la détermination de la seconde durée (T2) de la seconde phase.

## Claims

1. Method of controlling a DC-DC converter, which includes an induction coil (L) as a reactive element, for supplying, in cooperation with a set of at least two alternately operating switches (P1, N1), an output voltage (Vout) with a higher, equal or lower level than the level of an input voltage (Vbat) provided by a continuous voltage source (Bat), the method including, in each successive control cycle, a first phase wherein a first control signal (CK1) controls at least a first switch (P1, N1) to make said switch conductive and to increase a current through the induction coil during a first determined duration (T1),
**characterized in that** the method includes, after the first phase, a second phase, wherein a second control signal (CK2) controls at least a second switch (N1, P1) to make said switch conductive and to decrease the current through the induction coil during a second adjustable duration (T2), detection means (2, 4, 5) being provided for detecting, at the end of the second phase, the sign of any overvoltage across one of the terminals (Vx, Vy) of the induction coil, connected to the switches and for supplying a detection signal, which is maintained for a determined duration, prior to detection of another successive cycle, in a high state or a low state depending upon the detected overvoltage sign, timing means (Ri, Ci, 3), which receive the detection signal to adapt, in each successive cycle, the second duration of the second phase so as to cancel out the current in the induction coil at the end of the second phase.

2. Control method according to claim 1, **characterized in that** in each successive control cycle, the binary detection signal is integrated (Ri, Ci) in the timing means to supply a mean control voltage (Vi) to a timer (3), which supplies the second control signal (CK2) in the second phase whose duration is adapted.

3. Control method according to claim 2, **characterized in that** the timer (3) is clocked by the rising or falling edge of the first control signal (CK1) at the end of the first phase, in order to supply the second control signal (CK2) to make the second switch (P1, N1) conductive in the second phase during the second adapted duration (T2).

4. Control method according to any one of the preceding claims, **characterized in that** detection of the overvoltage sign across one terminal (Vx, Vy) of the induction coil at the end of the second phase by the detection means, is carried out via a D flip-flop (2), which is clocked in each cycle by a rising edge or falling edge of a third control signal (CK2b) to supply the detection signal at output.

5. Control method according to claim 4, wherein one input of the D flip-flop is directly connected to the terminal of the induction coil connected to the switches (P1, N1), **characterized in that** the rising edge or the falling edge of the third control signal (CK2b) for detecting overvoltage acts after a delay (τ) after the end of the second duration of the second phase and prior to the end of a control cycle in discontinuous mode.

6. Control method according to claim 4, wherein a comparator (4) of the DC-DC converter is connected, via a negative input, to an output voltage terminal (Vout) and via a positive input to a capacitor (Ce) for storing the voltage across one terminal of the induction coil (L), connected to the switches through another switch (5), controlled by a fourth control signal (CK2a), **characterized in that** the overvoltage sign is directly detected by the comparator (4), which is connected by the other switch (5) controlled by the fourth control signal (CK2a) in a closed state during the entire second duration of the second phase, at the end of the second duration (T2) the switch being opened to store the overvoltage level across the capacitor so that the comparator supplies an output signal to the input of the D flip-flop (2).

7. Control method according to claim 6, **characterized in that** the fourth control signal (CK2a) opens the switch (5) after a delay (τ₁) following the end of the second duration of the second phase and prior to the end of each control cycle in discontinuous mode, and **in that** the rising edge or falling edge of the third control signal (CK2b) for clocking the D flip-flop (2) intervenes after an additional delay after the switch opening (τ₂) delay and prior to the end of each control cycle in discontinuous mode.

8. DC-DC converter suitable for implementing the control method according to any one of the preceding claims, said converter including an induction coil (L) as a reactive element, for supplying, in cooperation with a set of at least two alternately operating switches (P1, N1), an output voltage (Vout) with a higher, equal or lower level than the level of an input voltage (Vbat) provided by a continuous voltage source (Bat), at least a first switch being controlled by a first control signal (CK1) in a first phase of a control cycle, whereas at least a second switch is controlled by a second control signal (CK2) in a second phase, **characterized in that** it also includes detection means (2, 4, 5), which are provided for detecting, at the end of a second phase of each control cycle, the sign of any overvoltage across one of the terminals (Vx, Vy) of the induction coil connected to the switches and for supplying a detection signal, which is in a high state or in a low state depending upon the detected overvoltage sign, to timing means (Ri, Ci, 3), which can adapt, in each successive cycle, the second duration of the second phase so as to cancel out the current in the induction coil at the end of the second phase.

9. DC-DC converter according to claim 8, **characterized in that** the detection means include a D flip-flop (2), one input of which is directly connected to one terminal (Vx, Vy) of the induction coil connected to the switches, said D flip-flop being clocked by a rising edge or a falling edge of a third control signal that intervenes after the end of the second phase to supply the detection signal in a high state or in a low state.

10. DC-DC converter according to claim 8, **characterized in that** the detection means include a comparator (4), which is connected, via a negative input, to an output voltage terminal (Vout) and via a positive input to a capacitor (Ce) for storing the voltage across one terminal of the induction coil (L), connected to the switches via switch (5) that is controlled by a fourth control signal (CK2a), so that the switch is in a closed state during each second phase and in an open state after a first (τ₁) delay following the second phase, an output signal of the comparator being supplied to a D flip-flop, which is clocked by a rising edge or a falling edge of a third control signal that intervenes after a second delay (τ₂) following opening of the other switch, to supply the detection signal in a high state or in a low state.

11. DC-DC converter according to any one of claims 8 to 10 **characterized in that** the timing means include an integrator, which is formed of a resistor (Ri) connected to the output of the detection means, and a capacitor (Ci), and a timer (3) connected to the connection node of the resistor and the capacitor, whose voltage, stored across the capacitor, controls the timer to determine the second duration (T2) of the second phase.

## Patentansprüche

1. Verfahren zum Regeln eines Gleichstrom/Gleichstrom-Umsetzers, der eine Induktivität (L) als reaktives Element aufweist, um in Kooperation mit einer Anordnung aus wenigstens zwei Kommutatoren (P1, N1), die wechselseitig arbeiten, zu ermöglichen, eine Ausgangsspannung (Vout) mit einem Pegel zu liefern, der größer, gleich oder kleiner als der Pegel einer Eingangsspannung (Vbat) ist, die von einer Gleichspannungsquelle (Bat) geliefert wird, wobei das Verfahren in jedem aufeinander folgenden Regelungszyklus eine erste Phase umfasst, in der wenigstens ein erster Kommutator (P1, N1) durch ein erstes Steuersignal (CK1) gesteuert wird, um ihn durchzuschalten, und um einen Strom durch die Induktivität während einer ersten bestimmten Dauer (T1) anwachsen zu lassen,
**dadurch gekennzeichnet, dass** das Verfahren nach der ersten Phase eine zweite Phase umfasst, in der wenigstens ein zweiter Kommutator (N1, P1) durch ein zweites Steuersignal (CK2) gesteuert wird, um ihn durchzuschalten und um den Strom durch die Induktivität während einer einstellbaren zweiten Dauer (T2) abnehmen zu lassen, wobei Detektionsmittel (2, 4, 5) vorgesehen sind, um nach Ablauf der zweiten Phase das Vorzeichen einer Überspannung an einem der Anschlüsse (Vx, Vy) der Induktivität, der mit den Kommutatoren verbunden ist, zu detektieren und um ein Detektionssignal zu liefern, das während einer bestimmten Dauer vor einer erneuten Detektion eines nachfolgenden Zyklus als Funktion des detektierten Vorzeichens der Überspannung in einem hohen Zustand oder in einem niedrigen Zustand gehalten wird, wobei Verzögerungsmittel (Ri, Ci, 3) das Detektionssignal empfangen, um in jedem nachfolgenden Zyklus die zweite Dauer der zweiten Phase in der Weise anzupassen, dass der Strom in der Induktivität nach Ablauf der zweiten Phase null ist.

2. Regelungsverfahren nach Anspruch 1, **dadurch gekennzeichnet, dass** in jedem aufeinander folgenden Regelungszyklus eine Integration (Ri, Ci) des binären Detektionssignals in den Verzögerungsmitteln ausgeführt wird, um eine mittlere Steuerspannung (Vi) zu einem Verzögerungsglied (3) zu liefern, das das zweite Steuersignal (CK2) in der zweiten Phase mit angepasster Dauer liefert.

3. Regelungsverfahren nach Anspruch 2, **dadurch gekennzeichnet, dass** das Verzögerungsglied (3) durch die Anstiegsflanke oder die Anstiegsflanke des ersten Steuersignals (CK1) nach Ablauf der ersten Phase getaktet wird, um das zweite Steuersignal (CK2) zu liefern, um den zweiten Kommutator (P1, N1) in der zweiten Phase während der angepassten zweiten Dauer (T2) durchzuschalten.

4. Regelungsverfahren nach einem der vorhergehenden Ansprüche, **dadurch gekennzeichnet, dass** die Detektion des Vorzeichens der Überspannung an einem Anschluss (Vx, Vy) der Induktivität nach Ablauf der zweiten Phase durch die Detektionsmittel mittels eines D-Flipflops (2), das in jedem Zyklus durch eine Anstiegsflanke oder eine Abstiegsflanke eines dritten Steuersignals (CK2b) getaktet wird, erfolgt, um am Ausgang das Detektionssignal zu liefern.

5. Regelungsverfahren nach Anspruch 4, wobei ein Eingang des D-Flipflops direkt mit dem Anschluss der Induktivität verbunden ist, der mit den Kommutatoren (P1, N1) verbunden ist, **dadurch gekennzeichnet, dass** die Anstiegsflanke oder die Abstiegsflanke des dritten Steuersignals (CK2b) für die Detektion der Überspannung nach einer Verzögerung (τ) nach dem Ende der zweiten Dauer der zweiten Phase und vor dem Ende eines Regelungszyklus im diskontinuierlichen Modus auftritt.

6. Regelungsverfahren nach Anspruch 4, wobei ein Komparator (4) des Gleichstrom/Gleichstrom-Umsetzers über einen negativen Eingang mit einem Anschluss der Ausgangsspannung (Vout) und über einen positiven Eingang mit einem Kondensator (Ce) verbunden ist, um die Spannung an einem Anschluss der Induktivität (L), der mit den Kommutatoren über einen durch ein viertes Steuersignal (CK2a) gesteuerten Unterbrecher (5) verbunden ist, zu speichern, **dadurch gekennzeichnet, dass** die Detektion des Vorzeichens der Überspannung direkt durch den Komparator (4) erfolgt, der mit dem Unterbrecher (5) verbunden ist, der durch das vierte Steuersignal (CK2a) während der gesamten zweiten Dauer der zweiten Phase in einen geschlossenen Zustand gesteuert wird, wobei der Unterbrecher nach Ablauf der zweiten Dauer (T2) geöffnet wird, um den Pegel der Überspannung an dem Kondensator zu speichern, damit der Komparator ein Ausgangssignal an den Eingang des D-Flipflops (2) liefert.

7. Regelungsverfahren nach Anspruch 6, **dadurch gekennzeichnet, dass** das vierte Steuersignal (CK2a) das Öffnen des Unterbrechers (5) nach einer Verzögerung (τ) nach dem Ende der zweiten Dauer der zweiten Phase und vor dem Ende jedes Regelungszyklus im diskontinuierlichen Modus steuert und dass die Anstiegsflanke oder die Abstiegsflanke des dritten Steuersignals (CK2b) zum Takten des D-Flipflops (2) nach einer zusätzlichen Verzögerung (τ₂) bezüglich der Verzögerung des Öffnens des Unterbrechers und vor dem Ende jedes Regelungszyklus im diskontinuierlichen Modus auftritt.

8. Gleichstrom/Gleichstrom-Umsetzer für die Ausführung des Regelungsverfahrens nach einem der vorhergehenden Ansprüche, wobei der Umsetzer eine Induktivität (L) als reaktives Element umfasst, um in Kooperation mit einer Anordnung aus wenigstens zwei Kommutatoren (P1, N1), die wechselweise arbeiten, zu ermöglichen, eine Ausgangsspannung (Vout) mit einem Pegel zu liefern, der größer, gleich oder kleiner als der Pegel einer Eingangsspannung (Vbat) ist, die durch eine Gleichspannungsquelle (Bat) geliefert wird, wobei wenigstens ein erster Kommutator durch ein erstes Steuersignal (CK1) in einer ersten Phase eines Regelungszyklus gesteuert wird, während wenigstens ein zweiter Kommutator durch ein zweites Steuersignal (CK2) in einer zweiten Phase gesteuert wird, **dadurch gekennzeichnet, dass** er außerdem Detektionsmittel (2, 4, 5) umfasst, die vorgesehen sind, um nach Ablauf einer zweiten Phase jedes Regelungszyklus das Vorzeichen einer Überspannung an einem der Anschlüsse (Vx, Vy) der Induktivität, der mit den Kommutatoren verbunden ist, zu detektieren und um ein Detektionssignal, das als Funktion des Vorzeichens der detektierten Überspannung in einem hohen Zustand oder in einem tiefen Zustand ist, zu Verzögerungsmitteln (Ri, Ci, 3) zu liefern, die ermöglichen, in jedem nachfolgenden Zyklus die zweite Dauer der zweiten Phase in der Weise anzupassen, dass der Strom in der Induktivität nach Ablauf der zweiten Phase null ist.

9. Gleichstrom/Gleichstrom-Umsetzer nach Anspruch 8, **dadurch gekennzeichnet, dass** die Detektionsmittel ein D-Flipflop (2) umfassen, wovon ein Eingang direkt mit einem Anschluss (Vx, Vy) der Induktivität verbunden ist, der seinerseits mit den Kommutatoren verbunden ist, wobei das D-Flipflop durch eine Anstiegsflanke oder eine Anstiegsflanke eines dritten Steuersignals, das nach dem Ende der zweiten Phase auftritt, getaktet wird, um das Detektionssignal in einem hohen Zustand oder in einem tiefen Zustand zu liefern.

10. Gleichstrom/Gleichstrom-Umsetzer nach Anspruch 8, **dadurch gekennzeichnet, dass** die Detektionsmittel einen Komparator (4) umfassen, der über einen negativen Eingang mit einem Anschluss der Ausgangsspannung (Vout) verbunden ist und über einen positiven Eingang mit einem Kondensator (Ce) verbunden ist, um die Spannung an einem Anschluss der Induktivität (L), der mit den Kommutatoren über einen Unterbrecher (5) verbunden ist, der durch ein viertes Steuersignal (CK2a) so gesteuert wird, dass der Unterbrecher während jeder zweiten Phase in einem geschlossenen Zustand ist und nach einer ersten Verzögerung (τ₁) nach der zweiten Phase in einem geöffneten Zustand ist, zu speichern, wobei ein Ausgangssignal des Komparators an ein D-Flipflop geliefert wird, das durch eine Anstiegsflanke oder eine Abstiegsflanke eines dritten Steuersignals, das nach einer zweiten Verzögerung (τ₂) nach dem Öffnen des Unterbrechers auftritt, getaktet wird, um das Detektionssignal in einem hohen Zustand oder in einem tiefen Zustand zu liefern.

11. Gleichstrom/Gleichstrom-Umsetzer nach einem der Ansprüche 8 bis 10, **dadurch gekennzeichnet, dass** die Verzögerungsmittel einen Integrator, der aus einem Widerstand (Ri), der mit dem Ausgang der Detektionsmittel verbunden ist, und aus einem Kondensator (Ci) gebildet ist, und ein Verzögerungsglied (3), das mit dem Verbindungsknoten zwischen dem Widerstand und dem Kondensator verbunden ist, umfassen, wobei die in dem Kondensator gespeicherte Spannung das Verzögerungsglied steuert, um die zweite Dauer (T2) der zweiten Phase zu bestimmen.
